# EUROPÄISCHE PATENTSCHRIFT

(11) **EP 3 580 796 B1**
(45) Veröffentlichungstag und Bekanntmachung des Hinweises auf die Patenterteilung: **30.12.2020**
(21) Anmeldenummer: 17704006.0
(22) Anmeldetag: 09.02.2017
(51) Int. Cl.: H01M 4/134, H01M 4/38, H01M 10/052, H01M 10/0525, H01M 4/02

(54) **ANODENMATERIALIEN AUF SI-BASIS FÜR LITHIUM-IONEN-BATTERIEN**
SI-BASED ANODE MATERIALS FOR LITHIUM ION BATTERIES
MATÉRIAUX D'ANODE À BASE DE SI POUR DES BATTERIES AU LITHIUM-ION

(43) Veröffentlichungstag der Anmeldung: 18.12.2019
(73) Patentinhaber: Wacker Chemie AG, 81737 München (DE)
(72) Erfinder: AY, Sefer, 81369 München (DE); JANTKE, Dominik, 84489 Burghausen (DE); STOHRER, Jürgen, 82049 Pullach (DE); SUCKOW, Sebastian, 84489 Burghausen (DE); VOIT, Harald, 84571 Reischach (DE)
(74) Vertreter: Ege, Markus
(86) Internationale Anmeldenummer: PCT/EP2017/052883
(87) Internationale Veröffentlichungsnummer: WO 2018/145750

(56) Entgegenhaltungen:
- EP-A1- 0 727 678
- WO-A1-91/05723
- JP-A- H10 182 125
- JP-A- H11 335 254
- US-A- 5 469 020
- US-A1- 2004 004 301
- US-A1- 2004 214 085
- US-A1- 2010 124 707
- US-A1- 2013 095 324
- US-A1- 2016 049 652
- STOBER W ET AL: "Controlled growth of monodisperse silica spheres in the micron size range", JOURNAL OF COLLOID AND INTERFACE SCIENCE, ACADEMIC PRESS,INC, US, Bd. 26, Nr. 1, 1. Januar 1968 (1968-01-01) , Seiten 62-69, XP024189444, ISSN: 0021-9797, DOI: 10.1016/0021-9797(68)90272-5 [gefunden am 1968-01-01]
- STROBEL R ET AL: "Flame aerosol synthesis of smart nanostructured materials", JOURNAL OF MATERIALS CHEMISTRY, ROYAL SOCIETY OF CHEMISTRY, GB, Bd. 17, 25. September 2007 (2007-09-25), Seiten 4743-4756, XP002540713, ISSN: 0959-9428, DOI: 10.1039/B711652G
- S. L. GIRSHICK ET AL: "Homogeneous nucleation of particles from the vapor phase in thermal plasma synthesis", PLASMA CHEMISTRY AND PLASMA PROCESSING., Bd. 9, Nr. 3, 1. September 1989 (1989-09-01), Seiten 355-369, XP055378580, US ISSN: 0272-4324, DOI: 10.1007/BF01083672
- SEE-HOW NG ET AL: "Highly Reversible Lithium Storage in Spheroidal Carbon-Coated Silicon Nanocomposites as Anodes for Lithium-Ion Batteries", ANGEWANDTE CHEMIE INTERNATIONAL EDITION, Bd. 45, Nr. 41, 20. Oktober 2006 (2006-10-20), Seiten 6896-6899, XP055377992, ISSN: 1433-7851, DOI: 10.1002/anie.200601676
- YAN YAO ET AL: "Interconnected Silicon Hollow Nanospheres for Lithium-Ion Battery Anodes with Long Cycle Life", NANO LETTERS, Bd. 11, Nr. 7, 13. Juli 2011 (2011-07-13), Seiten 2949-2954, XP055046276, ISSN: 1530-6984, DOI: 10.1021/nl201470j
- ZAILEI ZHANG ET AL: "Amorphous silicon-carbon nanospheres synthesized by chemical vapor deposition using cheap methyltrichlorosilane as improved anode materials for Li-ion batteries", NANOSCALE, Bd. 5, Nr. 12, 1. Januar 2013 (2013-01-01) , Seite 5384, XP055378890, United Kingdom ISSN: 2040-3364, DOI: 10.1039/c3nr00635b
- A. MAGASINSKI ET AL: "High-performance lithium-ion anodes using a hierarchical bottom-up approach", NATURE MATERIALS, Bd. 9, Nr. 4, 1. April 2010 (2010-04-01), Seiten 353-358, XP055024468, ISSN: 1476-1122, DOI: 10.1038/nmat2725
- GE M ET AL: "Review of porous silicon preparation and its application for lithium-ion battery anodes", NANOTECHNOLOGY, IOP, BRISTOL, GB, Bd. 24, Nr. 42, 25. September 2013 (2013-09-25), Seite 422001, XP020252093, ISSN: 0957-4484, DOI: 10.1088/0957-4484/24/42/422001 [gefunden am 2013-09-25]
- MATTHEW T. MCDOWELL ET AL: "25th Anniversary Article: Understanding the Lithiation of Silicon and Other Alloying Anodes for Lithium-Ion Batteries", ADVANCED MATERIALS, Bd. 25, Nr. 36, 22. September 2013 (2013-09-22), Seiten 4966-4985, XP055378128, DE ISSN: 0935-9648, DOI: 10.1002/adma.201301795
- MINGYUAN GE ET AL: "Porous Doped Silicon Nanowires for Lithium Ion Battery Anode with Long Cycle Life", NANO LETTERS, Bd. 12, Nr. 5, 9. Mai 2012 (2012-05-09), Seiten 2318-2323, XP055378882, US ISSN: 1530-6984, DOI: 10.1021/nl300206e
- WEI SUN ET AL: "A long-life nano-silicon anode for lithium ion batteries: supporting of graphene nanosheets exfoliated from expanded graphite by plasma-assisted milling", ELECTROCHIMICA ACTA., Bd. 187, 1. Januar 2016 (2016-01-01), Seiten 1-10, XP055378129, GB ISSN: 0013-4686, DOI: 10.1016/j.electacta.2015.11.020
- RAN YI ET AL: "Integrating Si nanoscale building blocks into micro-sized materials to enable practical applications in lithium-ion batteries", NANOSCALE, Bd. 8, Nr. 4, 1. Januar 2016 (2016-01-01), Seiten 1834-1848, XP055378370, United Kingdom ISSN: 2040-3364, DOI: 10.1039/C5NR07625K
- WEN WEI LEE ET AL: "Novel synthesis of high performance anode materials for lithium-ion batteries (LIBs)", JOURNAL OF MATERIALS CHEMISTRY A: MATERIALS FOR ENERGY AND SUSTAINABILITY, Bd. 2, Nr. 6, 1. Januar 2014 (2014-01-01), Seiten 1589-1626, XP055378374, GB ISSN: 2050-7488, DOI: 10.1039/C3TA12830J
- KARTHIKEYAN J ET AL: "Plasma spray synthesis of nanomaterial powders and deposits", MATERIALS SCIENCE AND ENGINEERING: A, ELSEVIER, AMSTERDAM, NL, Bd. A238, Nr. 2, 1. Januar 1997 (1997-01-01), Seiten 275-286, XP002250516, ISSN: 0921-5093, DOI: 10.1016/S0921-5093(96)10568-2
- PING WU ET AL: "Three-Dimensional Interconnected Network of Graphene-Wrapped Porous Silicon Spheres: In Situ Magnesiothermic-Reduction Synthesis and Enhanced Lithium-Storage Capabilities", ACS APPL.MATER.INTERFACES, Bd. 6, Nr. 5, 12. März 2014 (2014-03-12), Seiten 3546-3552, XP055379703, ISSN: 1944-8244, DOI: 10.1021/am405725u

## Beschreibung

Die Erfindung betrifft Anodenmaterialien für Lithium-Ionen-Batterien enthaltend kugelförmige, unporöse, mikroskalige Siliciumpartikel sowie solche Anodenmaterialien enthaltende Lithium-Ionen-Batterien.

Wiederaufladbare Lithium-Ionen-Batterien sind momentan die kommerziell verfügbaren elektrochemischen Energiespeicher mit der höchsten spezifischen Energie von bis zu 250 Wh/kg. Sie werden vor allem im Bereich der tragbaren Elektronik, für Werkzeuge und auch für Transportmittel, wie beispielsweise Fahrräder oder Automobile, genutzt. Insbesondere für die Anwendung in Automobilen ist es jedoch notwendig, die Energiedichte der Batterien weiter deutlich zu steigern, um höhere Reichweiten der Fahrzeuge zu erreichen.

Als negatives Elektrodenmaterial ("Anode") wird in der Praxis gegenwärtig vor allem graphitischer Kohlenstoff verwendet. Nachteilig ist dessen relativ niedrige elektrochemische Kapazität von theoretisch 372 mAh/g, die nur etwa ein Zehntel der mit Lithiummetall theoretisch erreichbaren elektrochemischen Kapazität entspricht. Dagegen besitzt Silicium mit 4199 mAh/g die höchste bekannte Speicherkapazität für Lithium-Ionen. Nachteiligerweise erleiden Silicium enthaltende Elektrodenaktivmaterialien beim Laden bzw. Entladen mit Lithium extreme Volumenänderungen von bis ungefähr 300%. Durch diese Volumenänderung kommt es zu einer starken mechanischen Beanspruchung des Aktivmaterials und der gesamten Elektrodenstruktur, die durch elektrochemisches Mahlen zu einem Verlust der elektrischen Kontaktierung und damit zur Zerstörung der Elektrode unter Kapazitätsverlust führt. Weiterhin reagiert die Oberfläche des eingesetzten Silicium-Anodenmaterials mit Bestandteilen des Elektrolyten unter kontinuierlicher Bildung passivierender Schutzschichten (Solid Electrolyte Interphase; SEI), was zu einem irreversiblen Verlust an mobilem Lithium führt.

Zur Steigerung der Zyklenbeständigkeit von Siliciumpartikel enthaltenden Lithium-Ionen-Batterien empfiehlt US2004214085, poröse Siliciumpartikel in Anodenmaterialien einzusetzen. Die Poren sollen ein elektrochemisches Mahlen und Pulverisieren des Aktivmaterials beim Zyklisieren der Batterien unterbinden. Die Herstellung der porösen Siliciumpartikel erfolgt gemäß US 2004214085, indem eine Schmelze basierend auf Silicium und weiteren Metallen mittels Atomisierung in Partikel überführt wird, aus denen anschließend die weiteren Metalle mit Säuren herausgeätzt werden, wodurch in den Siliciumpartikeln Poren gebildet werden.

Die US7097688 befasst sich allgemein mit der Herstellung von sphärischen, grobteiligen Partikeln basierend auf Silicium enthaltenden Legierungen und zielt hierbei auf eine Verbesserung von Atomisierungs-Verfahren. Darin wurden Schmelzen der Legierungen in einer Sprühkammer atomisiert und anschließend abgekühlt unter Erhalt der Partikel. Die Partikel haben Durchmesser von 5 bis 500 mesh, das heißt von 31 bis 4.000 µm. Konkret beschrieben sind Partikel einer Si-Fe-Legierung mit einer durchschnittlichen Partikelgröße von 300 µm. Die JP10182125 befasst sich mit der Bereitstellung von hochreinem Siliciumpulver (6N-Qualität; 99,9999%ige Reinheit) für die Solarzellenproduktion. Hierzu wurde geschmolzenes Silicium mittels Sprühverfahren in Tropfen überführt, die dann in Wasser abgekühlt wurden, wodurch Siliciumpartikel mit Partikelgrößen von beispielsweise 0,5 bis 1 mm erhalten wurden. Die JP2005219971 offenbart Plasmaverfahren, um sphärische Siliciumpartikel zu gewinnen. Angaben zur Größe der Produktpartikel sind der JP2005219971 nicht entnehmbar. Als Einsatzgebiet für die Siliciumpartikel sind auch Solarzellen genannt. Die US2004004301 beschreibt eine Plasmaverrundung von Siliciumpartikeln mit anschließender Entfernung von SiO von der Partikeloberfläche durch alkalisches Ätzen. Als mittlere Partikelgröße sind 100 µm angegeben und als Anwendungsmöglichkeiten sind Solarzellen, Halbleiter, Raketentreibstoffe und Kernbrennstoffe genannt.

Die Patentanmeldung mit der Anmeldenummer DE102015215415 A1 beschreibt den Einsatz von Siliciumpartikeln in Lithium-Ionen-Batterien. Als Verfahren zur Herstellung solcher Partikel werden Gasphasenabscheidungsverfahren und Mahlprozesse genannt. Mahlverfahren führen zwangsläufig zu splitterförmigen Produkten. Mikroskalige Produkte von Gasphasenabscheidungsverfahren liegen zwangsläufig in Form von Aggregaten vor und sind somit auch nicht kugelförmig. Mit Gasphasenabscheidungsverfahren sind mikroskalige Siliciumpartikel nicht auf ökonomische Weise erhältlich. Die US 2016/049652 A1 offenbart weiterhin poröse kugelförmige Siliziumoxidpartikel als Anodenaktivmaterial für Li-Ionen-Batterien, wobei die siliziumbasierten Partikel Partikelgrößen im mikroskaligen Bereich haben. Der Forschungsartikel "Highly Reversible Lithium Storage in Spheroidal Carbon-Coated Silicon Nanocomposites as Anodes for Lithium-Ion Batteries" (See-How NG et al, Angewandte Chemie International Edition) offenbart nanoskalige kugelförmige Siliziumpartikel als Anodenaktivmaterial für Li-Ionen-Batterien. Die kugelförmigen Siliziumpartikel haben eine durchschnittliche Partikelgröße von 10 nm bis 100 nm, wobei das Silizium in elementarer Form vorliegt. Der Forschungsartikel "Interconnected Silicon Hollow Nanospheres for Lithium-Ion Battery Anodes with Long Cycle Life" (YAN YAO ET AL, Nano Letters) offenbart nanoskalige Siliciumpartikel in Form von Hohlkugeln als Anodenaktivmaterial für Li-Ionen-Batterien, wobei die Siliziumpartikel porös sind. Die Siliziumpartikel haben eine durchschnittliche Partikelgröße von 200 nm, wobei das Silizium in elementarer Form vorliegt.

Vor diesem Hintergrund bestand die Aufgabe, leistungsfähige, kostengünstig verfügbare Anodenaktivmaterialien für Lithium-Ionen-Batterien bereitzustellen, die Lithium-Ionen-Batterien mit hoher Zyklenbeständigkeit und möglichst geringer SEI-Bildung ermöglichen.

Der Umfang der Erfindung ist durch die Ansprüche 1 und 9 definiert. Ein Gegenstand der Erfindung sind Anodenmaterialien für Lithium-Ionen-Batterien enthaltend kugelförmige, unporöse Siliciumpartikel mit einer Porosität von ≤ 1 mL/g (Bestimmungsmethode: BJH-Methode gemäß DIN 66134) und mit durchschnittlichen Partikelgrößen (d₅₀) von 1 bis 10 µm und einem Siliciumgehalt von 97 bis 99,8 Gew.-% enthalten sind, wobei sich der Siliciumgehalt auf das Gesamtgewicht der Siliciumpartikel abzüglich etwaiger Gehalte an Sauerstoff bezieht, und wobei das Silicium in elementarer Form vorliegt, mit den Maßgaben,
dass ≥ 80% der Siliciumpartikel ein orthogonales Achsenverhältnis *R* von 0,60 ≤ *R* ≤ 1,0 haben, und
dass die Siliciumpartikel ein mittleres orthogonales Achsenverhältnis *R* von 0,60 ≤ *R* ≤ 1,0 haben,
wobei das orthogonale Achsenverhältnis *R* der Quotient aus den beiden größten zueinander orthogonalen Durchmessern durch einen Siliciumpartikel ist und der größere Durchmesser den Nenner und der kleinere Durchmesser den Zähler des Quotienten bildet (Bestimmungsmethode: REM-Aufnahme).

Die erfindungsgemäß in Anodenmaterialien eingesetzten Siliciumpartikel können hergestellt werden durch Zerstäubung von Silicium oder mittels Plasmaverrundung von Siliciumpartikeln.

Das in den vorgenannten Verfahren eingesetzte Silicium wird im Folgenden auch als Edukt-Silicium bezeichnet.

Das Edukt-Silicium hat einen Siliciumgehalt von vorzugsweise 97 bis 99,8 Gew.-%, besonders bevorzugt 97,5 bis 99,5 Gew.-% und am meisten bevorzugt 98 bis 99,0 Gew.-%, wobei sich der Siliciumgehalt auf das Gesamtgewicht der Siliciumpartikel abzüglich etwaiger Gehalte an Sauerstoff bezieht. Ein etwaiger Sauerstoffgehalt der Siliciumpartikel kann beispielsweise davon abhängen, wie die Siliciumpartikel gelagert werden, was nicht wesentlich ist für die vorliegende Erfindung. Deswegen findet ein etwaiger, in den Siliciumpartikeln enthaltener Sauerstoff keine Berücksichtigung bei der erfindungsgemäßen Angabe des Siliciumgehalts. Subtraktion des Sauerstoffgehalts der Siliciumpartikel vom Gesamtgewicht der Siliciumpartikel ergibt das Gewicht, auf das sich die erfindungsgemäße Angabe des Siliciumgehalts bezieht. Die Bestimmung des Siliciumgehalts und des Sauerstoffgehalts erfolgt über Elementaranalysen, wie weiter unten bei der Beschreibung der Beispiele angegeben.

Das Edukt-Silicium kann in elementarer Form, in Form von binären, ternären oder multinären Silicium/Metall-Legierungen (mit beispielsweise Li, Na, K, Sn, Ca, Co, Ni, Cu, Cr, Ti, Al, Fe) vorliegen. Das Edukt-Silicium kann gegebenenfalls Siliciumoxid enthalten. Bevorzugt wird elementares Silicium, insbesondere da dieses eine vorteilhaft hohe Speicherkapazität für Lithium-Ionen aufweist.

Metalle, insbesondere Erdalkalimetalle, wie Calcium, sind im Edukt-Silicium zu vorzugsweise ≤ 1 Gew.-%, besonders bevorzugt 0,01 bis 1 Gew.-% und am meisten bevorzugt 0,015 bis 0,5 Gew.-% enthalten, bezogen auf das Gesamtgewicht des Siliciums. Höhere Gehalte beispielsweise von Erdalkalimetallen können bei der Verarbeitung der Siliciumpartikel zu Anodentinten, insbesondere in wässrigen Systemen, zu einer pH-Verschiebung der Tinten ins Alkalische führen, was beispielsweise die Korrosion von Silicium fördert und unerwünscht ist.

Elementares Silicium umfasst beispielsweise Polysilicium, das Fremdatome (wie beispielsweise B, P, As) enthält, gezielt mit Fremdatomen dotiertes Silicium (wie beispielsweise B, P, As), insbesondere Silicium aus metallurgischer Verarbeitung, welches elementare Verunreinigung (wie beispielsweise Fe, Al, Cu, Zr, C) aufweisen kann.

Besonders bevorzugt ist Silicium aus metallurgischer Verarbeitung.

Wenn das Edukt-Silicium mit einem Alkalimetall M legiert ist, dann liegt die Stöchiometrie der Legierung M_{y}Si bevorzugt im Bereich 0 < y < 5. Die Siliciumpartikel können gegebenenfalls prälithiiert sein. Für den Fall, dass die Siliciumpartikel mit Lithium legiert sind, liegt die Stöchiometrie der Legierung Li_{z}Si bevorzugt im Bereich 0 < z < 2,2.

Falls das Edukt-Silicium Siliciumoxid enthält, dann liegt die Stöchiometrie des Oxids SiOₓ bevorzugt im Bereich 0 < x < 1,3. Falls ein Siliciumoxid mit höherer Stöchiometrie enthalten ist, dann befindet es sich vorzugsweise an der Oberfläche von Siliciumpartikeln, vorzugsweise mit Schichtdicken von kleiner als 10 nm.

Das Edukt-Silicium kann nach herkömmlichen Verfahren, wie Gasphasenabscheidungsverfahren oder vorzugsweise Mahlprozesse, bereitgestellt werden, wie beispielsweise in der Patentanmeldung mit der Anmeldenummer DE102015215415 A1 beschrieben. Als Mahlprozesse kommen beispielsweise Nass- oder insbesondere Trockenmahlprozesse in Betracht. Hierbei werden vorzugsweise Planetenkugelmühlen, Strahlmühlen, wie Gegenstrahl oder Prallmühlen, oder Rührwerkskugelmühlen eingesetzt.

Für das Zerstäubungsverfahren ist auch der Begriff Atomising, Atomisierung oder Mikronisierung geläufig.

Im Zerstäubungsverfahren wird allgemein Silicium geschmolzen oder Silicium in Form einer Schmelze eingesetzt, das geschmolzene Silicium wird in Tropfenform gebracht und Abkühlen der Tropfen auf eine Temperatur unterhalb des

Schmelzpunktes ergibt die erfindungsgemäß in Anodenmaterialien eingesetzten Siliciumpartikel. Der Schmelzpunkt von Silicium liegt im Bereich von 1410°C.

Für das Zerstäubungsverfahren wird das Silicium vorzugsweise als Feststoff eingesetzt. Das Edukt-Silicium kann beliebige Formen annehmen, beispielsweise splittrig oder grobteilig sein. Alternativ kann das Silicium auch als Schmelze eingesetzt werden. Vorzugsweise stammt eine solche Schmelze aus der metallurgischen Herstellung von Silicium.

Als Zerstäubungsverfahren können beispielsweise Zentrifugal-, Gas- oder Flüssigkeits-Zerstäubungsverfahren, insbesondere Wasser-Zerstäubungsverfahren, Einsatz finden. Es können gängige Zerstäubungs-Vorrichtungen verwendet werden.

Eine Zerstäubungs-Vorrichtung enthält vorzugsweise einen Ofen, insbesondere einen Induktionsofen; gegebenenfalls einen Zwischenbehälter; eine Zerstäubungskammer; einen Sammler; und gegebenenfalls ein oder mehrere weitere Einheiten, beispielsweise eine Abtrenneinheit, eine Trocknungseinheit und/oder eine Klassiereinheit.

Zur Durchführung des Zerstäubungsverfahrens wird das Edukt-Silicium vorzugsweise in den Ofen eingebracht und darin geschmolzen. Das geschmolzene Silicium hat Temperaturen von beispielsweise 1500 bis 1650°C. Vom Ofen kann das geschmolzene Silicium direkt der Zerstäubungskammer zugeführt werden; alternativ kann das geschmolzene Silicium auch vom Ofen in einen Zwischenbehälter, beispielsweise in einen Sammelbehälter, eingebracht und von diesem der Zerstäubungskammer zugeführt werden. Das geschmolzene Silicium wird üblicherweise durch ein oder mehrere Düsen in die Zerstäubungskammer eingebracht, allgemein in Form eines Strahles. Die Düsen haben Durchmesser von vorzugsweise 1 bis 10 mm.

Beim Gas- oder Flüssigkeits-Zerstäubungsverfahren wird üblicherweise ein Zerstäubungsmedium durch ein oder vorzugsweise mehrere weitere Düsen in die Zerstäubungskammer eingebracht. Das Zerstäubungsmedium trifft in der Zerstäubungskammer generell auf das Silicium, wodurch das geschmolzene Silicium in Tröpfchen überführt wird. Beim Zerstäubungsmedium kann es sich beispielsweise um überkritische Fluide, Gase, beispielsweise Edelgase, insbesondere Argon, oder vorzugsweise um Flüssigkeiten, wie Wasser oder organische Lösungsmittel, wie Kohlenwasserstoffe oder Alkohole, insbesondere Hexan, Heptan, Toluol, Methanol, Ethanol oder Propanol, handeln. Bevorzugtes Zerstäubungsmedium ist Wasser. Das Zerstäubungsmedium wird im Allgemeinen unter erhöhtem Druck in die Zerstäubungskammer eingebracht.

Beim Zentrifugal-Zerstäubungsverfahren trifft das geschmolzene Silicium in der Zerstäubungskammer wie üblich auf eine rotierende Scheibe, wodurch das Silicium in Tröpfchen überführt wird.

In der Zerstäubungskammer kann eine Schutzgasatmosphäre herrschen. Beispiele für Schutzgase sind Edelgase, insbesondere Argon. Der Druck in der Zerstäubungskammer liegt beispielsweise im Bereich von 50 mbar bis 1,5 bar.

Das Silicium kann durch den Schutzgasstrom, den Zerstäubungsmediumsstrom oder die Schwerkraft einem Sammler zugeführt werden. Der Sammler kann eine separate Einheit oder integraler Bestandteil der Zerstäubungskammer sein, beispielsweise den Boden der Zerstäubungskammer bilden.

Die Erstarrung des geschmolzenen, tröpfchenförmigen Siliciums beginnt oder erfolgt üblicherweise in der Zerstäubungskammer. Eine Abkühlung des geschmolzenen Siliciums kann beim Kontakt mit dem Zerstäubungsmedium und/oder während der weiteren Verweilzeit in der Zerstäubungskammer und/oder im Sammler erfolgen. Der Sammler kann ein Kühlmedium enthalten, beispielsweise Wasser. Das Kühlmedium kann hinsichtlich seiner Zusammensetzung dem Zerstäubungsmedium entsprechen. Das Kühlmedium hat einen pH-Wert von vorzugsweise 1 bis 8, besonders bevorzugt 1 bis 7,5 und noch mehr bevorzugt 2 bis 7.

Dem Sammler können die Siliciumpartikel entnommen werden, gegebenenfalls gemeinsam mit Kühlmedium und etwaigen Zerstäubungsmedien, insbesondere flüssigen Zerstäubungsmedien. Bei Einsatz von Kühlmedien und/oder flüssigen Zerstäubungsmedien kann schon im Sammler eine Sedimentation erfolgen. Zur Abtrennung von Kühlmedien und/oder flüssigen Zerstäubungsmedien kann die Mischung mit den Siliciumpartikeln aus dem Sammler in eine Abtrenneinheit überführt werden. In der Abtrenneinheit können die Siliciumpartikel beispielsweise durch Sieben, Filtrieren, Sedimentieren oder Zentrifugieren vom Kühlmedium und/oder flüssigen Zerstäubungsmedien abgetrennt werden. Die so erhaltenen Siliciumpartikel können gegebenenfalls weiteren Nachbehandlungen unterzogen werden, wie beispielsweise einem Trocknen, Klassieren oder einer Oberflächenbehandlung.

Auf diese Weise kann Silicium in Form der erfindungsgemäß in Anodenmaterialien eingesetzten Partikeln erhalten werden. Die Partikelgröße kann beispielsweise über den Durchmesser der Düsen, insbesondere über die Art und den Druck des Zerstäubungsmediums oder über den Kontaktwinkel zwischen den Strahlen des Siliciums und des Zerstäubungsmediums auf an sich herkömmliche Weise beeinflusst werden. Solche Einstellungen sind apparateabhängig und können an Hand von wenigen orientierenden Versuchen ermittelt werden.

Mittels der Plasmaverrundung können Siliciumpartikel beliebiger Form in kugelförmige Partikel überführt werden. Dazu werden allgemein Siliciumpartikel mittels Plasmabestrahlung ganz oder vorzugsweise teilweise geschmolzen, wobei unrunde Siliciumpartikel in eine Kugelform überführt werden. Abkühlen auf eine Temperatur unterhalb des Schmelzpunktes von Silicium führt zu den erfindungsgemäß in Anodenmaterialien eingesetzten, kugelförmigen Siliciumpartikeln.

Beim Edukt-Silicium für die Plasmaverrundung kann es sich beispielsweise um splitterförmige oder kantige Siliciumpartikel handeln, insbesondere Würfel-, Prisma-, Klinge-, Platten-, Schuppen-, Zylinder-, Stangen-, Faser- oder Faden-förmige Siliciumpartikel. Es können auch Mischungen von Siliciumpartikeln unterschiedlicher Form eingesetzt werden. Im Allgemeinen liegt das Edukt-Silicium also nicht oder höchstens anteilig Form von runden oder kugelförmigen Partikeln vor.

Die Edukt-Siliciumpartikel können herkömmlich in einen Plasmareaktor eingebracht werden. Im Plasmareaktor werden die Siliciumpartikel allgemein durch Plasma erhitzt. Dabei wird generell die Oberfläche der Siliciumpartikel zumindest teilweise, vorzugsweise vollständig geschmolzen. Vorzugsweise schmelzen die einzelnen Siliciumpartikel zu einem Anteil von zumindest 10 Gew.-%, besonders bevorzugt zumindest 50 Gew.-%. Die Siliciumpartikel schmelzen vorzugsweise nicht vollständig. Im Plasmareaktor liegt das Silicium allgemein in Form von Partikeln oder angeschmolzenen Tropfen von Silicium vor.

Die Atmosphäre im Plasmareaktor enthält vorzugsweise Inertgase, insbesondere Edelgase, wie Argon, und gegebenenfalls reduzierende Gase, wie Wasserstoff. Die Temperaturen im Plasmareaktor liegen im Bereich von vorzugsweise 12.000 bis 20.000°C. Der Druck im Plasmareaktor kann beispielsweise im Bereich von 10 mbar bis 1,5 bar liegen. Es können die gängigen Plasmareaktoren Einsatz finden, beispielsweise Plasmareaktoren, die unter dem Handelsnamen Teksphero der Firma Tekna vertrieben werden.

Die so behandelten Partikel können anschließend abgekühlt werden unter Erstarrung. Auf diese Weise werden kugelförmige Siliciumpartikel zugänglich. Zum Erstarren werden die Siliciumpartikel im Allgemeinen in eine Abkühlzone des Plasmareaktors oder aus dem Plasmareaktor in eine Kühlkammer überführt. Die Kühlkammer enthält vorzugsweise dieselbe Atmosphäre wie der Plasmareaktor. Die Abkühlung kann beispielsweise bei Raumtemperatur erfolgen. In der Kühlkammer herrscht ein Druck von beispielsweise 10 mbar bis 1,5 bar.

Die Partikelgröße der durch Plasmaverrundung erhaltenen Siliciumpartikel wird wesentlich durch die Partikelgröße des eingesetzten Edukt-Siliciums determiniert. Die Verrundung kann über den Verschmelzungsgrad der Siliciumpartikel gesteuert werden, das heißt über den Umfang zu dem Edukt-Silicium aufgeschmolzen wird. Der Verschmelzungsgrad kann über die Verweilzeit der Siliciumpartikel im Plasmareaktor beeinflusst werden. Für größere und/oder stärker zu verrundende Siliciumpartikel ist eine längere Verweilzeit hilfreich. Die für den Einzelfall geeignete Verweilzeit kann an Hand weniger orientierender Versuche ermittelt werden.

Die erfindungsgemäß in Anodenmaterialien eingesetzten Siliciumpartikel sind kugelförmig. Dies erfordert jedoch nicht, dass die Siliciumpartikel eine perfekte Kugel-Geometrie einnehmen. Es können auch einzelne Segmente der Oberfläche der erfindungsgemäß en Siliciumpartikel von der Kugel-Geometrie abweichen. Die Siliciumpartikel können beispielsweise auch ellipsoide Formen annehmen. Im Allgemeinen sind die Siliciumpartikel nicht splittrig. Die Oberfläche der Siliciumpartikel ist vorzugsweise nicht kantig. Allgemein nehmen die Siliciumpartikel keine Würfel-, Prisma-, Klingen-, Platten-, Schuppen-, Zylinder-, Stangen-, Faser- oder Faden-Form an.

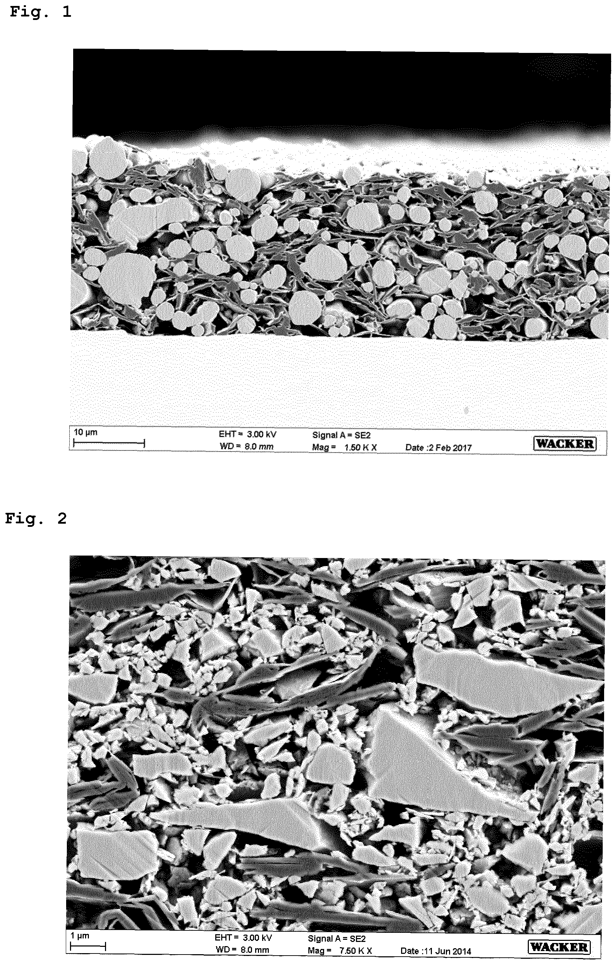

Die Kugel-Geometrie der erfindungsgemäß in Anodenmaterialien eingesetzten Siliciumpartikel kann beispielsweise visualisiert werden mit REM-Aufnahmen (Raster-Elektronen-Mikroskopie), insbesondere mit REM-Aufnahmen von Ionenböschungsschnitten durch erfindungsgemäße Siliciumpartikel enthaltende Körper oder Beschichtungen, beispielsweise durch erfindungsgemäße Siliciumpartikel enthaltende Elektroden, wie beispielsweise gezeigt mit Fig. 1.

Die kugelförmige Geometrie der erfindungsgemäß in Anodenmaterialien eingesetzten Siliciumpartikel kann an Hand solcher REM-Aufnahmen auch quantifiziert werden, beispielsweise durch das orthogonale Achsenverhältnis *R* eines erfindungsgemäßen Siliciumpartikels. Das orthogonale Achsenverhältnis *R* eines erfindungsgemäßen Siliciumpartikels ist der Quotient aus den beiden größten zueinander orthogonalen Durchmessern durch einen Siliciumpartikel, wobei der größere Durchmesser den Nenner und der kleinere Durchmesser den Zähler des Quotienten bildet (Bestimmungsmethode: REM-Aufnahme). Sind beide Durchmesser identisch, so ist das orthogonale Achsenverhältnis *R* gleich 1.

Vorzugsweise ist das orthogonale Achsenverhältnis *R* eines erfindungsgemäß in Anodenmaterialien eingesetzten Siliciumpartikels der Quotient aus dem größten Durchmesser und dem längsten hierzu orthogonalen Durchmesser durch einen Siliciumpartikel, wobei der größere Durchmesser den Nenner und der kleinere Durchmesser den Zähler des Quotienten bildet (Bestimmungsmethode: REM-Aufnahme).

Die erfindungsgemäß in Anodenmaterialien eingesetzten Partikel haben ein orthogonales Achsenverhältnis *R* von vorzugsweise ≥ 0,60, mehr bevorzugt ≥ 0,70, noch mehr bevorzugt ≥ 0,80, besonders bevorzugt ≥ 0,85, noch mehr bevorzugt ≥ 0,90 und am meisten bevorzugt ≥ 0,92. Das orthogonale Achsenverhältnis *R* ist beispielsweise ≤ 1,00, gegebenenfalls ≤ 0,99 oder ≤ 0,98. Die vorgenannten orthogonalen Achsenverhältnisse R werden vorzugsweise von ≥ 80%, besonders bevorzugt ≥ 85% und am meisten bevorzugt ≥ 90% oder von ≤ 99% der Gesamtzahl der Siliciumpartikel erfüllt.

Vorzugsweise weisen ≤ 10% der Siliciumpartikel ein orthogonales Achsenverhältnis *R* von < 0,60, insbesondere von ≤ 0,50 auf.

Die Siliciumpartikel haben mittlere orthogonale Achsenverhältnisse *R* von ≥ 0,60, bevorzugt ≥ 0,70, mehr bevorzugt ≥ 0,80, besonders bevorzugt ≥ 0,85. Die mittleren orthogonalen Achsenverhältnisse *R* sind ≤ 1,00 oder vorzugsweise ≤ 0,99. Hierbei ist das arithmethische Mittel gemeint.

Die internationale Norm der "Fédération Europeenne de la Manutention" gibt in der FEM 2.581 einen Überblick, unter welchen Gesichtspunkten ein Schüttgut zu betrachten ist. In der Norm FEM 2.582 werden die allgemeinen und spezifischen Schüttguteigenschaften hinsichtlich der Klassifizierung definiert. Kennwerte, die die Konsistenz und den Zustand des Gutes beschreiben sind zum Beispiel Kornform und Korngrößenverteilung (FEM 2.581 / FEM 2.582: General characteristics of bulk products with regard to their classification and their symbolization).

Nach DIN ISO 3435 können Schüttgüter in Abhängigkeit der Beschaffenheit der Kornkanten in 6 unterschiedliche Kornformen untergliedert werden:
I: scharfe Kanten mit ungefähr gleichen Ausmaßen in den drei Dimensionen (Bsp.: Würfel);
II: scharfe Kanten, deren eine deutlich länger ist als die anderen beiden (Bsp.: Prisma, Klinge);
III: scharfe Kanten, deren eine deutlich kleiner ist als die beiden anderen (Bsp.: Platte, Schuppen);
IV: runde Kanten mit ungefähr gleichen Ausmaßen in den drei Dimensionen (Bsp.: Kugel);
V: runde Kanten, in einer Richtung deutlich größer als in den anderen beiden (Bsp.: Zylinder, Stange);
VI: faserig, fadenförmig, lockenförmig, verschlungen.

Gemäß dieser Klassifizierung von Schüttgütern handelt es sich bei den erfindungsgemäß in Anodenmaterialien eingesetzten Siliciumpartikeln üblicherweise um Partikel der Kornform IV.

Die erfindungsgemäß in Anodenmaterialien eingesetzten Siliciumpartikel sind unporös.

Die erfindungsgemäß in Anodenmaterialien eingesetzten Siliciumpartikel haben eine Porosität von ≤ 1 mL/g, bevorzugt ≤ 0,5 mL/g und am meisten bevorzugt ≤ 0,01 mL/g (Bestimmungsmethode: BJH-Methode gemäß DIN 66134). Die Porosität bezeichnet beispielsweise das partikuläre Hohlraumvolumen der erfindungsgemäßen Siliciumpartikel.

Die Poren der Siliciumpartikel haben Durchmesser von vorzugsweise < 2 nm (Bestimmungsmethode: Porengrößenverteilung nach BJH (Gasadsorption) gemäß DIN 66134).

Die BET-Oberflächen der erfindungsgemäß in Anodenmaterialien eingesetzten Siliciumpartikel betragen vorzugsweise 0,01 bis 30,0 m²/g, mehr bevorzugt 0,1 bis 25,0 m²/g, besonders bevorzugt 0,2 bis 20,0 m²/g und am meisten bevorzugt 0,2 bis 18,0 m²/g. Die BET-Oberfläche wird gemäß DIN 66131 (mit Stickstoff) bestimmt.

Die erfindungsgemäß in Anodenmaterialien eingesetzten Siliciumpartikel haben eine Dichte von vorzugsweise 2,0 bis 2,6 g/cm³, besonders bevorzugt 2,2 bis 2,4 g/cm³ und am meisten bevorzugt 2,30 bis 2,34 g/cm³ (Bestimmungsmethode: He-Pyknometrie gemäß DIN 66137-2).

Die erfindungsgemäß in Anodenmaterialien eingesetzten Siliciumpartikel haben volumengewichtete Partikelgrößenverteilungen mit Durchmesser-Perzentilen d₅₀ von vorzugsweise ≥ 2 µm, besonders bevorzugt ≥ 3 µm und am meisten bevorzugt ≥ 4 µm. Die erfindungsgemäß in Anodenmaterialien eingesetzten Siliciumpartikel haben d₅₀-Werte von vorzugsweise ≤ 8 µm, besonders bevorzugt ≤ 6 µm und am meisten bevorzugt ≤ 5 µm. Die Bestimmung der volumengewichteten Partikelgrößenverteilung der Siliciumpartikel erfolgte durch statische Laserstreuung unter Anwendung des Mie-Modells mit dem Messgerät Horiba LA 950 mit Ethanol oder Wasser als Dispergiermedium für die Siliciumpartikel.

Hinsichtlich der chemischen Zusammensetzung gilt für die erfindungsgemäß in Anodenmaterialien eingesetzten Siliciumpartikel das weiter oben zum Edukt-Silicium Gesagte. Insbesondere haben die Siliciumpartikel einen Siliciumgehalt von vorzugsweise 97 bis 99,8 Gew.-%, besonders bevorzugt 97,5 bis 99,5 Gew.-% und am meisten bevorzugt 98 bis 99,0 Gew.-%, wobei sich der Siliciumgehalt auf das Gesamtgewicht der Siliciumpartikel abzüglich etwaiger Gehalte an Sauerstoff bezieht. Metalle, insbesondere Erdalkalimetalle, wie Calcium, enthalten die Siliciumpartikel zu vorzugsweise ≤ 1 Gew.-%, besonders bevorzugt 0,01 bis 1 Gew.-% und am meisten bevorzugt 0,015 bis 0,5 Gew.-%, bezogen auf das Gesamtgewicht des Siliciums. Gegebenenfalls können die Siliciumpartikel Sauerstoff enthalten, insbesondere in Form eines Siliciumoxids. Der Anteil von Sauerstoff beträgt vorzugsweise 0,05 bis 1 Gew.-%, besonders bevorzugt 0,1 bis 0,8 Gew.-% und am meisten bevorzugt 0,15 bis 0,6 Gew.-%, bezogen auf das Gesamtgewicht der Siliciumpartikel.

Aus den nach den vorgenannten Verfahren erhaltenen Siliciumpartikeln wird im Allgemeinen kein Metall oder kein SiOx herausgeätzt, vorzugsweise kein Sn, Al, Pb, In, Ni, Co, Ag, Mn, Cu, Ge, Cr, Ti, Fe und insbesondere kein Ca.

Die nach den vorgenannten Verfahren erhaltenen Siliciumpartikel werden vorzugsweise direkt, das heißt ohne weiteren Verarbeitungsschritt, zur Herstellung von Lithium-Ionen-Batterien, insbesondere zur Herstellung von Anodentinten eingesetzt. Alternativ können ein oder mehrere Nachbehandlungsschritte durchgeführt werden, wie beispielsweise eine Kohlenstoffbeschichtung, eine Polymerbeschichtung oder eine oxidative Behandlung der Siliciumpartikel.

Kohlenstoff-beschichtete Siliciumpartikel sind beispielsweise erhältlich durch Beschichten der Siliciumpartikel mit einem oder mehreren Kohlenstoff-Precursoren und anschließendem Carbonisieren des so erhaltenen beschichteten Produkts, wobei die Kohlenstoff-Precursoren in Kohlenstoff umgewandelt werden. Beispiele für Kohlenstoff-Precursoren sind Kohlenhydrate und insbesondere polyaromatische Kohlenwasserstoffe, Peche und Polyacrylnitril. Alternativ sind Kohlenstoff-beschichtete Siliciumpartikel auch erhältlich, indem Siliciumpartikel nach CVD-Verfahren (Chemical-Vapor-Deposition, chemische Gasphasenabscheidung) unter Einsatz von einer oder mehreren Kohlenstoff-Vorstufen mit Kohlenstoff beschichtet werden. Kohlenstoff-Vorstufen sind beispielsweise Kohlenwasserstoffe mit 1 bis 10 Kohlenstoffatomen, wie Methan, Ethan und insbesondere Ethylen, Acetylen, Benzol oder Toluol. Die Kohlenstoff-beschichteten Siliciumpartikel basieren vorzugsweise zu ≤ 20 Gew.-%, besonders bevorzugt 0,1 bis 10 Gew.-% und am meisten bevorzugt 0,5 bis 5 Gew.-% auf Kohlenstoff, bezogen auf das Gesamtgewicht der Kohlenstoff-beschichteten Siliciumpartikel. Die Kohlenstoff-beschichteten Siliciumpartikel können beispielsweise hergestellt werden, wie in der Patentanmeldung mit der Anmeldenummer DE 102016202459.0 beschrieben.

Die erfindungsgemäßen Anodenmaterialien für Lithium-Ionen-Batterien enthalten ein oder mehrere Bindemittel, gegebenenfalls Graphit, gegebenenfalls eine oder mehrere weitere elektrisch leitende Komponenten und gegebenenfalls ein oder mehrere Additive, dadurch gekennzeichnet, dass ein oder mehrere erfindungsgemäße Siliciumpartikel enthalten sind.

Bevorzugte Rezepturen für das Anodenmaterial der Lithium-Ionen-Batterien enthalten vorzugsweise 5 bis 95 Gew.-%, insbesondere 60 bis 85 Gew.-% erfindungsgemäße Siliciumpartikel; 0 bis 40 Gew.-%, insbesondere 0 bis 20 Gew.-% weitere elektrisch leitende Komponenten; 0 bis 80 Gew.-%, insbesondere 5 bis 30 Gew.-% Graphit; 0 bis 25 Gew.-%, insbesondere 5 bis 15 Gew.-% Bindemittel; und gegebenenfalls 0 bis 80 Gew.-%, insbesondere 0,1 bis 5 Gew.-% Additive; wobei sich die Angaben in Gew.-% auf das Gesamtgewicht des Anodenmaterials beziehen und sich die Anteile aller Bestandteile des Anodenmaterials auf 100 Gew.-% aufsummieren.

In einer bevorzugten Rezeptur für das Anodenmaterial ist der Anteil von Graphitpartikeln und weiteren elektrisch leitenden Komponenten in Summe mindestens 10 Gew.-%, bezogen auf das Gesamtgewicht des Anodenmaterials.

Ein weiterer Gegenstand der Erfindung sind Lithium-Ionen-Batterien umfassend eine Kathode, eine Anode, einen Separator und einen Elektrolyt, dadurch gekennzeichnet, dass die Anode auf dem vorgenannten, erfindungsgemäßen Anodenmaterial basiert.

Neben den erfindungsgemäßen Siliciumpartikeln können zur Herstellung der erfindungsgemäßen Anodenmaterialien und Lithium-Ionen-Batterien die hierfür gängigen Ausgangsmaterialien eingesetzt werden und die hierfür üblichen Verfahren zur Herstellung der Anodenmaterialien und Lithium-Ionen-Batterien Anwendung finden, wie beispielsweise in der Patentanmeldung mit der Anmeldenummer DE 102015215415.7 beschrieben.

Ein weiterer Gegenstand der Erfindung sind Lithium-Ionen-Batterien umfassend eine Kathode, eine Anode, einen Separator und einen Elektrolyt, dadurch gekennzeichnet, dass die Anode auf dem vorgenannten, erfindungsgemäßen Anodenmaterial basiert; und das Anodenmaterial der vollständig geladenen Lithium-Ionen-Batterie nur teilweise lithiiert ist.

Bevorzugt ist also, dass das Anodenmaterial, insbesondere die erfindungsgemäßen Kohlenstoff-beschichteten Siliciumpartikel, in der vollständig geladenen Lithium-Ionen-Batterie nur teilweise lithiiert ist. Vollständig geladen bezeichnet den Zustand der Batterie, in dem das Anodenmaterial der Batterie ihre höchste Beladung an Lithium aufweist. Teilweise Lithiierung des Anodenmaterials bedeutet, dass das maximale Lithiumaufnahmevermögen der Siliciumpartikel im Anodenmaterial nicht ausgeschöpft wird. Das maximale Lithiumaufnahmevermögen der Siliciumpartikel entspricht allgemein der Formel Li_{4.4}Si und beträgt somit 4,4 Lithiumatome pro Siliciumatom. Dies entspricht einer maximalen spezifischen Kapazität von 4200 mAh pro Gramm Silicium.

Das Verhältnis der Lithiumatome zu den Siliciumatomen in der Anode einer Lithium-Ionen-Batterie (Li/Si-Verhältnis) kann beispielsweise über den elektrischen Ladungsfluss eingestellt werden. Der Lithiierungsgrad des Anodenmaterials beziehungsweise der im Anodenmaterial enthaltenen Siliciumpartikel ist proportional zur geflossenen elektrischen Ladung. Bei dieser Variante wird beim Laden der Lithium-Ionen-Batterie die Kapazität des Anodenmaterials für Lithium nicht voll ausgeschöpft. Dies resultiert in einer teilweisen Lithiierung der Anode.

Bei einer alternativen, bevorzugten Variante wird das Li/Si-Verhältnis einer Lithium-Ionen-Batterie durch das Zellbalancing eingestellt. Hierbei werden die Lithium-Ionen-Batterien so ausgelegt, dass das Lithiumaufnahmevermögen der Anode vorzugsweise größer ist als das Lithiumabgabevermögen der Kathode. Dies führt dazu, dass in der vollständig geladenen Batterie das Lithiumaufnahmevermögen der Anode nicht voll ausgeschöpft ist, d.h. dass das Anodenmaterial nur teilweise lithiiert ist.

Bei der erfindungsgemäßen teilweisen Lithiierung beträgt das Li/Si-Verhältnis im Anodenmaterial im vollständig geladenen Zustand der Lithium-Ionen-Batterie vorzugsweise ≤ 2,2, besonders bevorzugt ≤ 1,98 und am meisten bevorzugt ≤ 1,76. Das Li/Si-Verhältnis im Anodenmaterial im vollständig geladenen Zustand der Lithium-Ionen-Batterie ist vorzugsweise ≥ 0,22, besonders bevorzugt ≥ 0,44 und am meisten bevorzugt ≥ 0,66.

Die Anode wird mit vorzugsweise ≤ 1500 mAh/g, besonders bevorzugt ≤ 1400 mAh/g und am meisten bevorzugt ≤ 1300 mAh/g beladen, bezogen auf die Masse der Anode. Die Anode wird bevorzugt mit mindestens 600 mAh/g, besonders bevorzugt ≥ 700 mAh/g und am meisten bevorzugt ≥ 800 mAh/g beladen, bezogen auf die Masse der Anode. Diese Angaben beziehen sich vorzugsweise auf die vollständig geladene Lithium-Ionen-Batterie.

Die Kapazität des Siliciums des Anodenmaterials der Lithium-Ionen-Batterie wird vorzugsweise zu ≤ 50%, besonders bevorzugt zu ≤ 45% und am meisten bevorzugt zu ≤ 40% genutzt, bezogen auf eine Kapazität von 4200 mAh pro Gramm Silicium.

Der Lithiierungsgrad von Silicium beziehungsweise die Ausnutzung der Kapazität von Silicium für Lithium (Si-Kapazitätsnutzung α) kann beispielsweise bestimmt werden, wie in der Patentanmeldung mit der Anmeldenummer DE102015215415 A1 auf Seite 11, Zeile 4 bis Seite 12, Zeile 25 beschrieben, insbesondere an Hand der dort genannten Formel für die Si-Kapazitätsnutzung α und den ergänzenden Angaben unter den Überschriften "Bestimmung der Delithiierungs-Kapazität β" und "Bestimmung des Si-Gewichtsanteils ω_{Si}" ("incorporated by reference") .

Der erfindungsgemäße Einsatz von Siliciumpartikeln in Lithium-Ionen-Batterien führt überraschenderweise zu einer Verbesserung von deren Zyklenverhalten. Solche Lithium-Ionen-Batterien haben einen geringen irreversiblen Kapazitätsverlust im ersten Ladezyklus und ein stabiles elektrochemisches Verhalten mit nur geringfügigem Fading in den Folgezyklen. Mit den erfindungsgemäß eingesetzten Siliciumpartikeln kann also ein niedriger initialer Kapazitätsverlust und zudem ein niedriger kontinuierlicher Kapazitätsverlust der Lithium-Ionen-Batterien erreicht werden. Insgesamt weisen die erfindungsgemäßen Lithium-Ionen-Batterien eine sehr gute Stabilität auf. Dies bedeutet, dass auch bei einer Vielzahl an Zyklen kaum Ermüdungserscheinungen, wie beispielsweise in Folge von mechanischer Zerstörung des erfindungsgemäßen Anodenmaterials oder SEI, auftreten.

Zudem sind die erfindungsgemäß eingesetzten Siliciumpartikel in Wasser, insbesondere in wässrigen Tintenformulierungen für Anoden von Lithiumionen-Batterien, in überraschender Weise stabil, so dass hierbei Probleme in Folge von Wasserstoffentwicklung unterbleiben. Dies ermöglicht eine Verarbeitung ohne ein Aufschäumen der wässrigen Tintenformulierung und die Herstellung von besonders homogenen bzw. Gasblasen-freien Anoden.

Silicium mit begrenzter Reinheit erwies sich als geeignet für Anodenaktivmaterial von Lithium-Ionen-Batterien mit vorteilhaftem Zyklenverhalten. Aufwändige Reinigungsverfahren zur Herstellung von hochreinem Silicium können somit entfallen. Damit sind die erfindungsgemäß eingesetzten Siliciumpartikel auf kostengünstige Weise zugänglich.

Die erfindungsgemäßen Ausgestaltungen der Siliciumpartikel wirken zur Erzielung dieser Effekte in synergistischer Weise zusammen.

Die nachfolgenden Beispiele dienen zur weiteren Erläuterung der Erfindung.

### Bestimmung der Partikelgrößen:

Die Messung der Partikelverteilung wurde durch statische Laserstreuung unter Anwendung des Mie-Modells mit einem Horiba LA 950 in einer stark verdünnten Suspension in Wasser oder Ethanol durchgeführt. Die angegebenen mittleren Partikelgrößen sind volumengewichtet.

### Elementaranalyse:

Die Bestimmung des O-Gehalts wurde an einem Leco TCH-600 Analysator durchgeführt.
Die Bestimmung der weiteren angegeben Elementgehalte (wie Si, Ca, Al, Fe) wurde nach Aufschluss der Si-Partikel anhand ICP (inductively coupled plasma)-Emissionsspektroskopie an einem Optima 7300 DV (Fa. Perkin Elmer), welches mit der Dual-View-Technik ausgestattet ist, durchgeführt.

### Bestimmung des BJH-Porenvolumens:

Die Porenanalyse wurde nach der Methode von Barrett, Joyner und Halenda (BJH, 1951) entsprechend DIN 66134 durchgeführt. Für die Auswertung wurden die Daten der Desorptionsisotherme genutzt. Das resultierende Ergebnis in Volumen pro Gramm gibt das Hohlraumvolumen der Poren an, ist also als partikuläre Porosität zu betrachten.

### Bestimmung des orthogonalen Achsenverhältnisses R:

Das orthogonale Achsenverhältnis *R* von Si-Partikeln wurde anhand von REM-Aufnahmen von Querschnitten durch Si-Partikel enthaltende Elektroden ermittelt.
Das orthogonale Achsenverhältnis *R* eines Si-Partikels ist der Quotient aus den beiden größten zueinander orthogonalen Durchmessern durch einen Si-Partikel, wobei der größere Durchmesser den Nenner und der kleinere Durchmesser den Zähler des Quotienten bildet (Bestimmungsmethode: REM-Aufnahme). Sind beide Durchmesser identisch, so ist das orthogonale Achsenverhältnis *R* gleich 1.

### Beispiel 1: Herstellung von Si-Partikeln durch Atomisierung:

Das Siliciumpulver wurde nach dem Stand der Technik durch Atomisierung einer Si-Schmelze mit einer Reinheit von Si 98,5% (metallurgisches Si) erhalten.
Partikelgrößenverteilung der so erhaltenen Siliciumpartikel (bestimmt mit Wasser als Dispergiermittel): d10 = 2,7 µm, d50 = 4,5 µm, d90 = 7,1 µm, (d90-d10) = 4,4 µm.
Porenvolumen (BJH-Messung): < 0,01 cm³/g.
Elementare Zusammensetzung: O 0,45%; Si 97,9%, Ca 52 ppm; Al 0,12%, Fe 0,47%.
Orthogonales Achsenverhältnisses *R:* Mittelwert: 0,86; 8% der Si-Partikel haben einen Wert *R* kleiner gleich 0,60; 80% der Partikel haben einen Wert *R* größer 0,80.

### Beispiel 2: Anode mit den Si-Partikeln aus Beispiel 1:

29,71 g bei 85° C bis zur Gewichtskonstanz getrockneter Polyacrylsäure (Sigma-Aldrich) und 756,60 g deionisiertes Wasser wurden mittels Schüttler (290 1/min) für 2,5 h bis zur vollständigen Lösung der Polyacrylsäure bewegt. Zu der Lösung wurde Lithiumhydroxid Monohydrat (Sigma-Aldrich) portionsweise hinzugegeben, bis der pH-Wert bei 7,0 lag (gemessen mit pH-Meter WTW pH 340i und Sonde SenTix RJD). Die Lösung wurde anschließend mittels Schüttler weitere 4 h durchmischt.
In 12,50 g der neutralisierten Polyacrylsäure-Lösung wurden 7,00 g der Siliciumpartikel aus Beispiel 1 und 5,10 g deionisiertes Wasser gegeben und mittels Dissolver bei einer Umlaufgeschwindigkeit von 4,5 m/s für 5 min und von 12 m/s für 30 min unter Kühlung bei 20°C dispergiert. Nach Zugabe von 2,50 g Graphit (Imerys, KS6L C) wurde weitere 30 min bei einer Umlaufgeschwindigkeit von 12 m/s gerührt.
Nach Entgasen wurde die Dispersion mittels eines Filmziehrahmens mit 0,08 mm Spalthöhe (Erichsen, Modell 360) auf eine Kupferfolie mit Dicke von 0,030 mm (Schlenk Metallfolien, SE-Cu58) aufgebracht. Die so hergestellte Anodenbeschichtung wurde anschließend 60 min bei 80°C und 1 bar Luftdruck getrocknet.
Das mittlere Flächengewicht der so erhaltenen trockenen Anodenbeschichtung betrug 2,88 mg/cm² und die Beschichtungsdichte 1,06 g/cm³.

Fig. 1 zeigt eine REM-Aufnahme des Ionenböschungsschnitts der Anodenbeschichtung aus Beispiel 2.

### Beispiel 3:

Lithium-Ionen-Batterie mit der Anode aus Beispiel 2:
Die elektrochemischen Untersuchungen wurden an einer Knopfzelle (Typ CR2032, Hohsen Corp.) in 2-Elektroden-Anordnung durchgeführt. Die Elektrodenbeschichtung aus Beispiel 2 wurde als Gegenelektrode bzw. negative Elektrode (Dm = 15 mm) eingesetzt, eine Beschichtung auf Basis von Lithium-Nickel-Mangan-Kobaltoxid 6:2:2 mit Gehalt von 94,0 % und mittlerem Flächengewicht von 14,8 mg/cm2 als Arbeitselektrode bzw. positive Elektrode (Dm = 15 mm) verwendet. Ein mit 60 µl Elektrolyt getränktes, Glasfaser-Filterpapier (Whatman, GD Type D) diente als Separator (Dm = 16 mm). Der verwendete Elektrolyt bestand aus einer 1,0-molaren Lösung von Lithiumhexafluorophosphat in einem 2:8 (v/v) Gemisch von Fluorethylencarbonat und Diethylcarbonat. Der Bau der Zelle erfolgte in einer Glovebox (< 1 ppm H₂O, O₂), der Wassergehalt in der Trockenmasse aller verwendeten Komponenten lag unterhalb von 20 ppm.
Die elektrochemische Testung wurde bei 20°C durchgeführt. Das Laden der Zelle erfolgte im cc/cv-Verfahren (constant current / constant voltage) mit konstantem Strom von 5 mA/g (entspricht C/25) im ersten Zyklus und von 60 mA/g (entspricht C/2) in den darauffolgenden Zyklen und nach Erreichen der Spannungsgrenze von 4,2 V mit konstanter Spannung bis Unterschreiten eines Stroms von 1,2 mA/g (entspricht C/100) bzw. 15 mA/g (entspricht C/8). Das Entladen der Zelle erfolgte im cc-Verfahren (constant current) mit konstantem Strom von 5 mA/g (entspricht C/25) im ersten Zyklus und von 60 mA/g (entspricht C/2) in den darauffolgenden Zyklen bis Erreichen der Spannungsgrenze von 3,0 V. Der gewählte spezifische Strom bezog sich auf das Gewicht der Beschichtung der positiven Elektrode.

Auf Grund der Rezeptierung wurde die Lithium-Ionen-Batterie durch Zellbalancing unter Teil-Lithiierung betrieben. Die Austestungsergebnisse sind in Tabelle 1 zusammengefasst.

### Vergleichsbeispiel 4:

Anode mit splittrigen Siliciumpartikeln mit d50 = 0,8 µm und 99,9%iger Reinheit:
Mittels Nassmahlung wurde eine Dispersion von splittrigen, unporösen Siliciumpartikeln (Siliciumanteil: 99,9% (solar grade Si); d50 = 0,80 µm) in Ethanol hergestellt (Festgehalt: 21,8%). Nach Zentrifugieren wurde Ethanol abgetrennt.

Orthogonales Achsenverhältnisses *R* der Siliciumpartikel: Mittelwert: 0,47; 88% der Si-Partikel haben einen Wert *R* kleiner gleich 0,60; 4% der Partikel haben einen Wert *R* größer 0,80.

Die Siliciumpartikel wurden in Wasser dispergiert (Festgehalt: 14,4%). 12,5 g der wässrigen Dispersion wurden zu 0,372 g einer 35 Gew.-%igen wässrigen Lösung von Polyacrylsäure (Sigma-Aldrich) und 0,056 g Lithiumhydroxid Monohydrat (Sigma-Aldrich) gegeben und mittels Dissolver bei einer Umlaufgeschwindigkeit von 4,5 m/s für 5 min und von 17 m/s für 30 min unter Kühlung bei 20°C dispergiert. Nach Zugabe von 0,645 g Graphit (Imerys, KS6L C) wurde für weitere 30 min bei einer Umlaufgeschwindigkeit von 12 m/s gerührt.
Nach Entgasen wurde die Dispersion mittels eines Filmziehrahmens mit 0,12 mm Spalthöhe (Erichsen, Modell 360) auf eine Kupferfolie mit Dicke von 0,030 mm (Schlenk Metallfolien, SE-Cu58) aufgebracht. Die so hergestellte Anodenbeschichtung wurde anschließend 60 min bei 80°C und 1 bar Luftdruck getrocknet.
Das mittlere Flächengewicht der trockenen Anodenbeschichtung betrug 2,73 mg/cm² und die Beschichtungsdichte 0,84 g/cm³.

Fig. 2 zeigt eine REM-Aufnahme des Ionenböschungsschnitts der Anodenbeschichtung aus Vergleichsbeispiel 4.

### Vergleichsbeispiel 5:

Lithium-Ionen-Batterie mit der Anode aus Beispiel 4:
Die Anode aus Beispiel 4 wurde wie in Beispiel 3 beschrieben getestet, wobei als Elektrolyt (120 µl) eine 1,0-molare Lösung von Lithiumhexafluorophosphat in einem 3:7 (v/v) Gemisch von Fluorethylencarbonat und Ethylmethylcarbonat, welche mit 2,0 Gew.-% Vinylencarbonat versetzt war, zu Einsatz kam. Auf Grund der Rezeptierung wurde die Lithium-Ionen-Batterie durch Zellbalancing unter Teil-Lithiierung betrieben. Die Austestungsergebnisse sind in Tabelle 1 zusammengefasst.

**Tabelle 1: Austestungsergebnisse mit den Batterien der (Vergleichs)Beispiele 3 und 5:**

| (V)Bsp. | Siliciumpartikel | Entladekapazität nach Zyklus 1 [mAh/ cm²] | Zyklenzahl mit ≥ 80% Kapazitätserhalt |
|---|---|---|---|
| 3 | Bsp. 1 | 2,00 | 161 |
| 5 | VBsp. 4 | 1,97 | 100 |

## Patentansprüche

1. Anodenmaterialien für Lithium-Ionen-Batterien enthaltend ein oder mehrere Bindemittel, gegebenenfalls Graphit, gegebenenfalls eine oder mehrere weitere elektrisch leitende Komponenten und gegebenenfalls ein oder mehrere Additive, **dadurch gekennzeichnet, dass** kugelförmige, unporöse Siliciumpartikel mit einer Porosität von ≤ 1 mL/g (Bestimmungsmethode: BJH-Methode gemäß DIN 66134) und mit durchschnittlichen Partikelgrößen von 1 bis 10 µm und einem Siliciumgehalt von 97 bis 99,8 Gew.-% enthalten sind, wobei sich der Siliciumgehalt auf das Gesamtgewicht der Siliciumpartikel abzüglich etwaiger Gehalte an Sauerstoff bezieht, und wobei das Silicium in elementarer Form vorliegt, mit den Maßgaben,
dass ≥ 80% der Siliciumpartikel ein orthogonales Achsenverhältnis *R* von 0,60 ≤ *R* ≤ 1,0 haben, und
dass die Siliciumpartikel ein mittleres orthogonales Achsenverhältnis *R* von 0,60 ≤ *R* ≤ 1,0 haben,
wobei das orthogonale Achsenverhältnis *R* der Quotient aus den beiden größten zueinander orthogonalen Durchmessern durch einen Siliciumpartikel ist und der größere Durchmesser den Nenner und der kleinere Durchmesser den Zähler des Quotienten bildet (Bestimmungsmethode: REM-Aufnahme).

2. Anodenmaterialien für Lithium-Ionen-Batterien gemäß Anspruch 1, **dadurch gekennzeichnet, dass** ≥ 80% der Siliciumpartikel ein orthogonales Achsenverhältnis *R* von 0,70 ≤ *R* ≤ 1,0 haben,
wobei das orthogonale Achsenverhältnis *R* der Quotient aus den beiden größten zueinander orthogonalen Durchmessern durch einen Siliciumpartikel ist und der größere Durchmesser den Nenner und der kleinere Durchmesser den Zähler des Quotienten bildet (Bestimmungsmethode: REM-Aufnahme).

3. Anodenmaterialien für Lithium-Ionen-Batterien gemäß Anspruch 1 oder 2, **dadurch gekennzeichnet, dass** die Siliciumpartikel ein mittleres orthogonales Achsenverhältnis *R* von 0,70 ≤ *R* ≤ 1,0 haben,
wobei das orthogonale Achsenverhältnis *R* der Quotient aus den beiden größten zueinander orthogonalen Durchmessern durch einen Siliciumpartikel ist und der größere Durchmesser den Nenner und der kleinere Durchmesser den Zähler des Quotienten bildet (Bestimmungsmethode: REM-Aufnahme).

4. Anodenmaterialien für Lithium-Ionen-Batterien gemäß Anspruch 1 bis 3, **dadurch gekennzeichnet, dass** die Siliciumpartikel mit Kohlenstoff beschichtet sind.

5. Anodenmaterialien für Lithium-Ionen-Batterien gemäß Anspruch 1 bis 4, **dadurch gekennzeichnet, dass** die kugelförmigen, unporösen Siliciumpartikel erhältlich sind durch Zerstäubung von Silicium.

6. Anodenmaterialien für Lithium-Ionen-Batterien gemäß Anspruch 5, **dadurch gekennzeichnet, dass** die kugelförmigen, unporösen Siliciumpartikel erhältlich sind, indem Silicium geschmolzen oder Silicium in Form einer Schmelze eingesetzt wird, das geschmolzene Silicium in Tropfenform gebracht wird und das so erhaltene Silicium in Tropfenform auf eine Temperatur unterhalb des Schmelzpunktes von Silicium abgekühlt wird.

7. Anodenmaterialien für Lithium-Ionen-Batterien gemäß Anspruch 1 bis 4, **dadurch gekennzeichnet, dass** die kugelförmigen, unporösen Siliciumpartikel erhältlich sind mittels Plasmaverrundung von Siliciumpartikeln.

8. Anodenmaterialien für Lithium-Ionen-Batterien gemäß Anspruch 7, **dadurch gekennzeichnet, dass** die kugelförmigen, unporösen Siliciumpartikel erhältlich sind, indem Siliciumpartikel mittels Plasmabestrahlung ganz oder teilweise geschmolzen werden, wobei unrunde Siliciumpartikel in eine Kugelform übergehen, und anschließend auf eine Temperatur unterhalb des Schmelzpunktes von Silicium abgekühlt wird.

9. Lithium-Ionen-Batterien umfassend eine Kathode, eine Anode, einen Separator und einen Elektrolyt, **dadurch gekennzeichnet, dass** die Anode auf einem Anodenmaterial gemäß Anspruch 1 bis 8 basiert.

10. Lithium-Ionen-Batterien gemäß Anspruch 9, **dadurch gekennzeichnet, dass** das Anodenmaterial in der vollständig geladenen Lithium-Ionen-Batterie nur teilweise lithiiert.

11. Lithium-Ionen-Batterien gemäß Anspruch 10, **dadurch gekennzeichnet, dass** die Anode in der vollständig geladenen Lithium-Ionen-Batterie mit 600 bis 1500 mAh/g beladen ist, bezogen auf die Masse der Anode.

12. Lithium-Ionen-Batterien gemäß Anspruch 10 bis 11, **dadurch gekennzeichnet, dass** im vollständig geladenen Zustand der Lithium-Ionen-Batterie das Verhältnis der Lithiumatome zu den Siliciumatomen im Anodenmaterial ≤ 2,2 beträgt.

13. Lithium-Ionen-Batterien gemäß Anspruch 10 bis 12, **dadurch gekennzeichnet, dass** die Kapazität des Siliciums des Anodenmaterials der Lithium-Ionen-Batterie zu ≤ 50% genutzt wird, bezogen auf die maximale Kapazität von 4200 mAh pro Gramm Silicium.

## Claims

1. Anode materials for lithium-ion batteries containing one or more binders, optionally graphite, optionally one or more further electrically conductive components and optionally one or more additives, **characterized in that** spherical, nonporous silicon particles having a porosity of ≤ 1 ml/g (determination method: BJH method in accordance with DIN 66134) and having average particle sizes of from 1 to 10 µm and a silicon content of 97% to 99.8% by weight are present, wherein the silicon content is based on the total weight of the silicon particles minus any oxygen contents, and wherein the silicon is present in elemental form, with the provisos that ≥ 80% of the silicon particles have an orthogonal axial ratio *R* of 0.60 ≤ *R* ≤ 1.0, and that the silicon particles have an average orthogonal axial ratio *R* of 0.60 ≤ *R* ≤ 1.0,
wherein the orthogonal axial ratio *R* is the quotient of the two largest mutually orthogonal diameters through a silicon particle and the larger diameter forms the denominator and the smaller diameter forms the numerator of the quotient (determination method: SEM image).

2. Anode materials for lithium-ion batteries according to Claim 1, **characterized in that** ≥ 80% of the silicon particles have an orthogonal axial ratio *R* of 0.70 ≤ *R* ≤ 1.0,
wherein the orthogonal axial ratio *R* is the quotient of the two largest mutually orthogonal diameters through a silicon particle and the larger diameter forms the denominator and the smaller diameter forms the numerator of the quotient (determination method: SEM image).

3. Anode materials for lithium-ion batteries according to Claim 1 or 2, **characterized in that** the silicon particles have an average orthogonal axial ratio *R* of 0.70 ≤ *R* ≤ 1.0,
wherein the orthogonal axial ratio *R* is the quotient of the two largest mutually orthogonal diameters through a silicon particle and the larger diameter forms the denominator and the smaller diameter forms the numerator of the quotient (determination method: SEM image).

4. Anode materials for lithium-ion batteries according to Claim 1 to 3, **characterized in that** the silicon particles have been coated with carbon.

5. Anode materials for lithium-ion batteries according to Claim 1 to 4, **characterized in that** the spherical, nonporous silicon particles are obtainable by atomization of silicon.

6. Anode materials for lithium-ion batteries according to Claim 5, **characterized in that** the spherical, nonporous silicon particles are obtainable by melting silicon or employing silicon in the form of a melt, forming the molten silicon into droplets and cooling the thus-obtained silicon in droplet form down to a temperature below the melting point of silicon.

7. Anode materials for lithium-ion batteries according to Claim 1 to 4, **characterized in that** the spherical, nonporous silicon particles are obtainable by means of plasma rounding of silicon particles.

8. Anode materials for lithium-ion batteries according to Claim 7, **characterized in that** the spherical, nonporous silicon particles are obtainable by fully or partially melting silicon particles by means of plasma irradiation, with non-round silicon particles transitioning into a spherical form, and subsequently cooling said particles down to a temperature below the melting point of silicon.

9. Lithium-ion batteries comprising a cathode, an anode, a separator and an electrolyte, **characterized in that** the anode is based on an anode material according to Claim 1 to 8.

10. Lithium-ion batteries according to Claim 9, **characterized in that** the anode material in the fully charged lithium-ion battery is only partially lithiated.

11. Lithium-ion batteries according to Claim 10, **characterized in that** the anode in the fully charged lithium-ion battery has been charged with 600 to 1500 mAh/g, based on the mass of the anode.

12. Lithium-ion batteries according to Claim 10 to 11, **characterized in that**, in the fully charged state of the lithium-ion battery, the ratio of the lithium atoms to the silicon atoms in the anode material is ≤ 2.2.

13. Lithium-ion batteries according to Claim 10 to 12, **characterized in that** the capacity of the silicon of the anode material of the lithium-ion battery is utilized to an extent of ≤ 50%, based on the maximum capacity of 4200 mAh per gram of silicon.

## Revendications

1. Matériaux d'anode pour des batteries lithium-ion, contenant un ou plusieurs liants, le cas échéant du graphite, le cas échéant un ou plusieurs autres composants électriquement conducteurs et le cas échéant un ou plusieurs additifs, **caractérisés en ce que** des particules sphériques, non poreuses de silicium, présentant une porosité ≤ 1 ml/g (méthode de détermination : méthode BJH selon la norme DIN 66134) et présentant des grosseurs moyennes de particule de 1 à 10 µm et une teneur en silicium de 97 à 99,8% en poids sont contenues, la teneur en silicium se rapportant au poids total des particules de silicium déduction faite de quelconques teneurs en oxygène et le silicium se trouvant sous forme élémentaire, à condition que ≥ 80% des particules de silicium présentent un rapport des axes orthogonaux R de 0,60 ≤ R ≤ 1,0 et
**que** les particules de silicium présentent un rapport moyen des axes orthogonaux R de 0,60 ≤ R ≤ 1,0,
le rapport des axes orthogonaux R étant le quotient des deux plus grands diamètres orthogonaux l'un par rapport à l'autre d'une particule de silicium et le diamètre le plus grand étant le dénominateur et le diamètre le plus petit le numérateur du quotient (méthode de détermination : cliché MEB).

2. Matériaux d'anode pour des batteries lithium-ion selon la revendication 1, **caractérisés en ce que** ≥ 80% des particules de silicium présentent un rapport des axes orthogonaux R de 0,70 ≤ R ≤ 1,0,
le rapport des axes orthogonaux R étant le quotient des deux plus grands diamètres orthogonaux l'un par rapport à l'autre d'une particule de silicium et le diamètre le plus grand étant le dénominateur et le diamètre le plus petit le numérateur du quotient (méthode de détermination : cliché MEB).

3. Matériaux d'anode pour des batteries lithium-ion selon la revendication 1 ou 2, **caractérisés en ce que** les particules de silicium présentent un rapport moyen des axes orthogonaux R de 0,70 ≤ R ≤ 1,0,
le rapport des axes orthogonaux R étant le quotient des deux plus grands diamètres orthogonaux l'un par rapport à l'autre d'une particule de silicium et le diamètre le plus grand étant le dénominateur et le diamètre le plus petit le numérateur du quotient (méthode de détermination : cliché MEB).

4. Matériaux d'anode pour des batteries lithium-ion selon la revendication 1 à 3, **caractérisés en ce que** les particules de silicium sont revêtues de carbone.

5. Matériaux d'anode pour des batteries lithium-ion selon la revendication 1 à 4, **caractérisés en ce que** les particules sphériques, non poreuses de silicium peuvent être obtenues par pulvérisation de silicium.

6. Matériaux d'anode pour des batteries lithium-ion selon la revendication 5, **caractérisés en ce que** les particules sphériques, non poreuses de silicium peuvent être obtenues **en ce que** le silicium est fondue ou utilisé sous forme d'une masse fondue, le silicium fondu est amené sous forme de gouttes et le silicium sous forme de gouttes ainsi obtenu est refroidi à une température inférieure au point de fusion du silicium.

7. Matériaux d'anode pour des batteries lithium-ion selon la revendication 1 à 4, **caractérisés en ce que** les particules sphériques, non poreuses de silicium peuvent être obtenues par arrondissement au plasma de particules de silicium.

8. Matériaux d'anode pour des batteries lithium-ion selon la revendication 7, **caractérisés en ce que** les particules sphériques, non poreuses de silicium peuvent être obtenues **en ce que** des particules de silicium sont fondues totalement ou partiellement par irradiation au plasma, des particules non sphériques de silicium passant sous une forme sphérique, et étant ensuite refroidies à une température inférieure au point de fusion du silicium.

9. Batteries lithium-ion, comprenant une cathode, une anode, un séparateur et un électrolyte, **caractérisées en ce que** l'anode est à base d'un matériau d'anode selon la revendication 1 à 8.

10. Batteries lithium-ion selon la revendication 9, **caractérisées en ce que** le matériau d'anode dans la batterie lithium-ion complètement chargée n'est que partiellement lithié.

11. Batteries lithium-ion selon la revendication 10, **caractérisées en ce que** l'anode dans la batterie lithium-ion complètement chargée est chargée par 600 à 1500 mAh/g, par rapport à la masse de l'anode.

12. Batteries lithium-ion selon la revendication 10 à 11, **caractérisées en ce que** dans l'état complètement chargé de la batterie lithium-ion, le rapport des atomes de lithium aux atomes de silicium dans le matériau d'anode est ≤ 2,2.

13. Batteries lithium-ion selon la revendication 10 à 12, **caractérisées en ce que** la capacité du silicium du matériau d'anode de la batterie lithium-ion est utilisée à ≤50%, par rapport à la capacité maximale de 4200 mAh par gramme de silicium.
